# EUROPÄISCHE PATENTSCHRIFT

(11) **EP 1 454 801 B1**
(45) Veröffentlichungstag und Bekanntmachung des Hinweises auf die Patenterteilung: **07.09.2005**
(21) Anmeldenummer: 04090053.2
(22) Anmeldetag: 17.02.2004
(51) Int. Cl.: B60R 21/20

(54) **Zierelement für Abdeckkappen von Airbagmodulen**
Decorative member for airbag module lids
Elément décoratif pour couvercles de modules de coussins gonflables

(30) Priorität: 05.03.2003 DE 20304056 U
(43) Veröffentlichungstag der Anmeldung: 08.09.2004
(73) Patentinhaber: Takata-Petri AG, 63743 Aschaffenburg (DE)
(72) Erfinder: Sauer Frank, 63843 Niedemberg (DE)
(74) Vertreter: Baumgärtel, Gunnar

(56) Entgegenhaltungen:
- EP-A- 0 835 788
- EP-A- 0 899 170
- DE-A- 10 100 747
- DE-A- 19 925 546

## Beschreibung

Die Erfindung betrifft ein Zierelement für Abdeckkappen von Airbagmodulen.

Abdeckkappen von Airbagmodulen, insbesondere von Fahrerairbagmodulen, sind häufig mit dekorativen Zierelementen versehen. Diese sind in der Vergangenheit zum größten Teil als starre Elemente aus Metall, z.B. aus Aluminium, oder aus Kunststoff gefertigt worden, die u.a. mit einer dekorativen Metallbschichtung versehen wurden. Diese Zierelemente führen zu einer Versteifung der Airbagkappe in dem Bereich, in dem im Crashfall der Airbag-Gassack austritt. Im Crashfall können diese steifen, schweren Zierelemente zu erheblichen Verletzungen des Insassen führen. Weiterhin besteht bei Auslösung des Airbags bei tiefen Temperaturen die Gefahr der Fragmentierung insbesondere bei filigranen Zierelementen.

Aus der deutschen Offenlegungsschrift 101 00 747 A1 ist eine Airbag-Abdeckung bekannt, auf der eine flexible Plakette befestigt ist. Diese Plakette ist vorzugsweise ein folienüberzogenes weiches Kunststoffteil. Bei Verwendung dieser Plakette wird zwar die Unfallgefahr verringert, aber insbesondere bei großen kompakten Zierelementen, wie sie zunehmend verwendet werden, kann ein unkontrolliertes Zerbrechen und Lösen der Teile des Zierelementes von der Abdeckkappe im Crashfall nicht ausgeschlossen werden.

Aus der europäischen Patentanmeldung 0 899 170 A2 ist eine Airbag-Abdeckung bekannt, auf der Logostrukturen aus schmalen, stegartigen Elementen angebracht sind. Diese können sowohl untereinander verbunden sein als auch als Einzelelemente angebracht sein. Dadurch wird insbesondere bei der letztgenannten Ausführungsform zwar die Gefahr des Lösens von Teilen im Crashfall stark verringert. Jedoch sind Logostrukturen aus stegartigen Elementen nicht immer erwünscht.

Der Erfindung liegt die Aufgabe zugrunde, im Crashfall die Verletzungsgefahr durch Zierelemente, die auf Abdeckkappen von Airbagmodulen angebracht sind, unabhängig von deren Struktur und Größe zu verringern.

Erfindungsgemäß wird das gemäß den Merkmalen des Anspruchs 1 erreicht.

So sind bei einem Zierelement für Abdeckkappen von Airbagmodulen erfindungsgemäß Sollbruchstellen und/oder Knickstellen vorgesehen. Diese sind vorzugsweise im Bereich der Aufreißkanten der Abdeckkappe vorgesehen. Durch die Anbringung von Sollbruchstellen und/oder Knickstellen wird das unkontrollierte Reißen des Zierelementes und dessen Abreißen von der Abdeckkappe weitestgehend vermieden. Die Anbringung von Sollbruchstellen und Knickstellen ist bei allen Zierelementen unabhängig von deren Form und Größe möglich. Die Vorteile ergeben sich aber vor allem bei großflächigen Zierelementen.

Zusätzlich zu den Sollbruchstellen im Bereich der Aufreißkanten der Abdeckkappe können insbesondere bei großflächigen Zierelementen auch außerhalb dieses Bereiches Sollbruchstellen bzw. Knickstellen vorgesehen sein. Dadurch wird die Gefahr des unkontrollierten Brechens und Abreißens von Teilen des Zierelementes durch die Verformung der Kappenoberfläche bei der Airbagauslösung weiter herabgesetzt.

Die Sollbruchstellen können unterschiedlich ausgeführt sein. So sind bei einer Ausführungsform an den Sollbruchstellen Materialschwächungen, z. B. in Form von Nuten, im Zierelement vorgesehen. Diese Materialschwächungen sind vorzugsweise auf der Rückseite des Zierelementes vorhanden.

Weiterhin ist es möglich, im Bereich der Sollbruchstellen Perforationen vorzusehen. Diese können von der Rückseite des Zierelementes bis knapp unter dessen Oberseite reichen, so daß die sichtbare Seite des Zierelementes unversehrt bleibt. Es können aber auch durchgehende Perforationen vorgesehen sein. Die Perforationen werdem vorzugsweise mittels Laser, Ultraschall oder durch Schneiden eingebracht.

Bei einem aus zwei Komponenten bestehenden Zierelement, wobei ein weicheres Trägermaterial und eine härtere Deckschicht vorgesehen sind, ist es zweckmäßig, daß die Deckschicht an der Sollbruchstelle geschwächt ist. Bei einer Materialschwächung auf der Rückseite der Deckschicht ist es zweckmäßig, daß das Trägermaterial in diese Materialschwächung eingreift. Wegen der geschwächten härteren Deckschicht wird das Brechen des Zierelementes an der Sollbruchstelle ermöglicht.

Das kontrollierte Brechen des Zierelementes an der Sollbruchstelle wird weiterhin dadurch positiv beeinflußt, daß das Zierelement aus flexiblem Kunststoff, z.B. aus Airbagkappenmaterial besteht. Für den Fall, daß eine metallische Oberfläche gefordert wird, kann die Oberfläche des Zierelementes mit einer durch Sputtern aufgebrachten Metallschicht versehen werden oder es kann eine galvanische Oberfläche vorgesehen sein. Weiterhin kann die Oberfläche auch lackiert sein.

Die Erfindung soll in Ausführungsbeispielen anhand von Zeichnungen erläutert werden. Es zeigen:
- Fig. 1: eine Draufsicht auf eine Airbagabdeckkappe mit einem Zierring als Zierelement und Sollbruchstellen im Bereich der Aufreißkanten der Airbagabdeckkappen;
- Fig. 2: eine Draufsicht auf eine Airbagabdeckkappe mit einem Zierring und zusätzlichen Sollbruchstellen;
- Fig. 3-5: Längsschnitte durch ein Zweikomponenten-Zierelement gemäß der Schnittlinie I - I der Fig. 1;
- Fig. 6-7: Querschnitte durch ein Zierelement mit Perforationen gemäß der Schittlinie II - II der Fig 1.

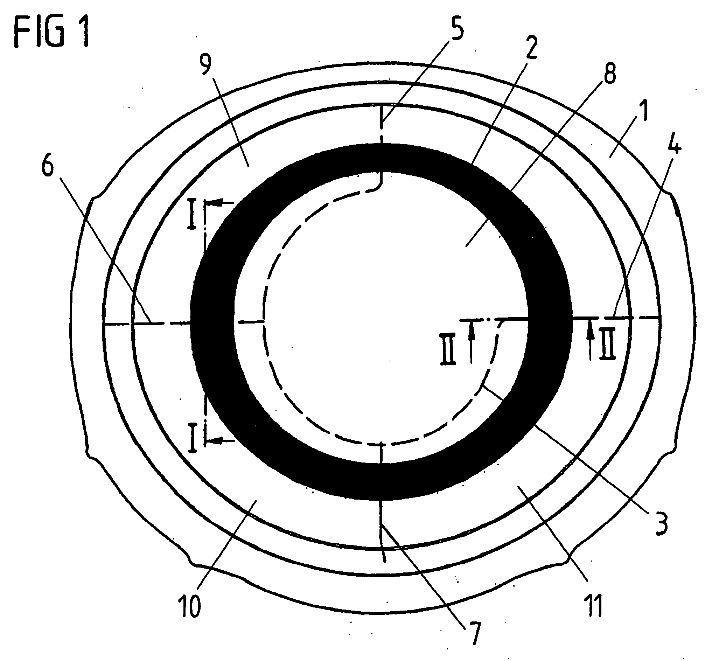

In der Fig. 1 ist eine Airbagabdeckkappe 1 mit einem Zierring 2 als Zierelement dargestellt. Der Zierring 2 ist in an sich bekannter Weise auf der Airbagabdeckkappe 1 befestigt. Diese ist mit Aufreißkanten 3 bis 7 versehen, so daß die Airbagabdeckkappe bei der Airbagauslösung in Sektionen 8 bis 11 aufreißen kann. Das Zierelement 2 weist an den Stellen der Aufreißkanten 4 bis 7 Sollbruchstellen auf, die an diesen Stellen entsprechend dem Verlauf der Aufreißkanten quer durch den Zierring 2 verlaufen. Dadurch reißt der Zierring zusammen mit den Aufreißkanten der Airbagabdeckkappe, so daß beim Aufreißen der Abdeckkappe an jeder ihrer Sektionen etwa ein Viertel des Zierringes verbleibt. Bei einer anderen Ausführung des Zierringes bzw. der Abdeckkappe könnten auch andere Teilabschnitte z. B. die Hälfte bis zu einem Achtel des Zierringes an der entsprechenden Sektion verbleiben.

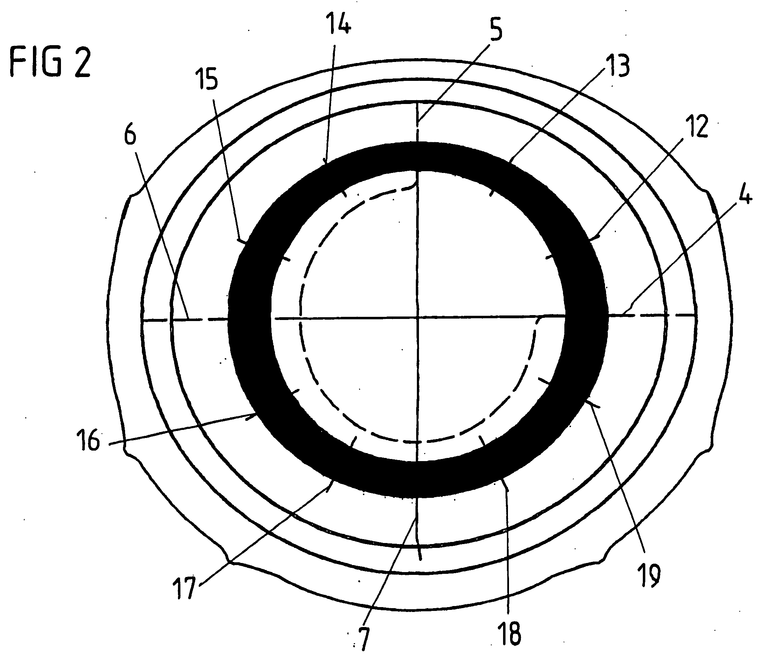

Bei der Ausführungsform der Fig. 2 sind wie bei der Ausführungsform der Fig. 1 am Zierelement Sollbruchstellen an den Stellen der Aufreißkanten 4 bis 7 vorgesehen. Zusätzlich sind aber am Zierelement weitere Sollbruchstellen bzw. Knickstellen 12 bis 19 an Stellen vorgesehen, an denen sich keine Aufreißkanten befinden. Dadurch können etwaige Verformungen der Abdeckkappe, wie sie bei der Airbagauslösung auftreten, vom Zierelement nachvollzogen werden, wodurch unkontrolliertes Brechen des Zierelementes mit größerer Wahrscheinlichkeit vermieden werden kann.

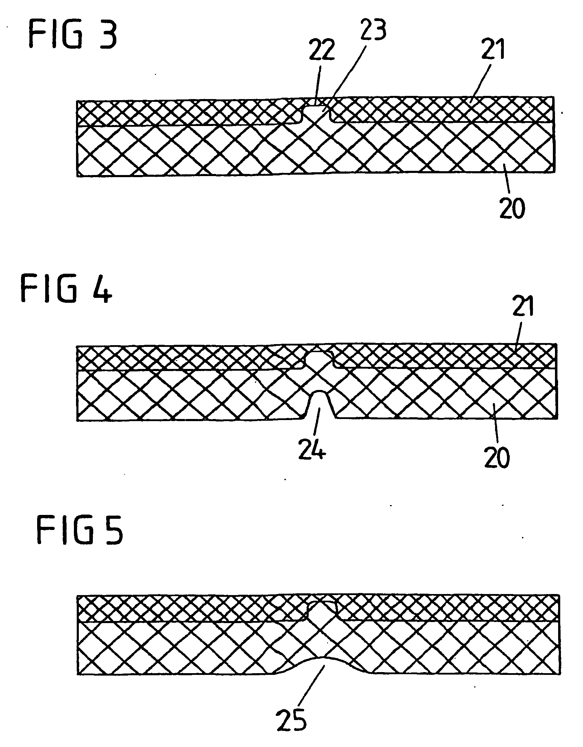

In den Figuren 3 bis 5 ist dargestellt, wie die Sollbruchstellen bei einem Zweikomponenten-Zierelement ausgebildet sein können. Dieses weist eine weiche Trägerschicht 20 und eine härtere Deckschicht 21 auf. An der Sollbruchstelle weist die Deckschicht 21 auf ihrer Rückseite eine Nut 22 auf, so daß die Deckschicht an dieser Stelle geschwächt ist. In diese Nut 22 greift ein dem Querschnitt der Nut angepaßter Vorsprung 23 der Trägerschicht 20 ein. Infolge der Schwächung der härteren Deckschicht 21 wird das Zierelement bei der Öffnung der Abdeckkappe an dieser Stelle brechen.

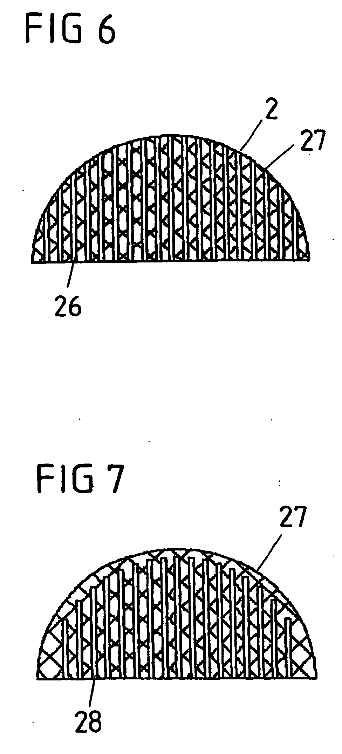

Die Ausführungsform der Fig. 4 entspricht der Ausführungsform der Fig. 3. Bei dieser Ausführungsform ist an der Stelle der Nut 22 der Deckschicht 21 in der Trägerschicht 20 zusätzlich eine Nut 24 bzw. bei der Ausführungsform der Fig. 5 eine Materialschwächung 25 vohanden. Dadurch wird das bevorzugte Brechen des Zierelementes an der Sollbruchstelle noch weiter gefördert.

Bei der Ausführungsform der Fig. 6 wird eine Sollbruchstelle durch Perforationen 26 im Zierring 2 erzielt. Die Perforationen sind durchgehend ausgeführt, so daß sie an der Oberseite 27 sichtbar sind.

Bei der Ausführungsform der Fig. 7 sind ebenfalls Perforationen vorgesehen. Diese Perforationen 28 sind aber nicht durchgehend ausgeführt, sondern ausgehend von der Rückseite des Zierrings 2 enden diese knapp unter der Oberseite 27, so daß sie an dieser nicht sichtbar sind.

## Patentansprüche

1. Zierelement für Abdeckkappen von Airbagmodulen,
**dadurch gekennzeichnet,**
**daß** am Zierelement (2) Sollbruchstellen und/oder Knickstellen vorgesehen sind.

2. Zierelement nach Anspruch 1, **dadurch gekennzeichnet, daß** Sollbruchstellen und Knickstellen im Bereich der Aufreißkanten (3 - 7) der Abdeckkappe (1) vorgesehen sind.

3. Zierelement nach Anspruch 1 oder 2, **dadurch gekennzeichnet, daß** Sollbruchstellen (12 - 19) und Knickstellen außerhalb des Bereichs der Aufreißkanten (3 - 7) der Abdeckkappe (1) vorgesehen sind.

4. Zierelelement nach mindestens einem der vorhergehenden Ansprüche, **dadurch gekennzeichnet, daß** an den Sollbruchstellen Materialschwächungen (22, 24, 25, 26, 28) im Zierelement (2) vorgesehen sind.

5. Zierelement nach Anspruch 4, **dadurch gekennzeichnet, daß** als Materialschwächungen Nuten (22, 24) vorgesehen sind.

6. Zierelement nach Anspruch 4 oder 5, **dadurch gekennzeichnet, daß** die Materialschwächungen (24, 25) auf der Rückseite des Zierelementes (2) vorgesehen sind.

7. Zierelement nach mindestens einem der vorhergehenden Ansprüche, **dadurch gekennzeichnet, daß** im Bereich der Sollbruchstellen Perforationen (26, 28) vorgesehen sind.

8. Zierelement nach Anspruch 7, **dadurch gekennzeichnet, daß** die Perforationen (28) von der Rückseite des Zierelementes (2) bis knapp unter dessen Oberseite (27) reichen.

9. Zierelement nach Anspruch 7 oder 8, **dadurch gekennzeichnet, daß** durchgehende Perforationen (26) vorgesehen sind.

10. Zierelement nach mindestens einem der vorhergehenden Ansprüche, **dadurch gekennzeichnet, daß** bei einem aus zwei Komponenten bestehenden Zierelement, wobei ein weicheres Trägermaterial (20) und eine härtere Deckschicht (21) vorgesehen sind, die Materialschwächung (22) in der Deckschicht (21) vorgesehen ist.

11. Zierelement nach Anspruch 10, **dadurch gekennzeichnet, daß** bei einer Materialschwächung (22) auf der Rückseite der Deckschicht (21) das Trägermaterial (23) in die Materialschwächung (22) eingreift.

12. Zierelement nach mindestens einem der vorhergehenden Ansprüche, **dadurch gekennzeichnet, daß** das Zierelement (2) aus flexiblem Kunstoff besteht.

13. Zierelement nach mindestens einem der vorhergehenden Ansprüche, **dadurch gekennzeichnet, daß** das Zierelement (2) aus Airbagkappenmaterial besteht.

14. Zierelement nach mindestens einem der vorhergehenden Ansprüche, **dadurch gekennzeichnet, daß** die Oberfläche des Zierelementes (2) mit einer durch Sputtern aufgebrachten Metallschicht versehen ist.

15. Zierelement nach mindestens einem der Ansprüche 1 bis 13, **dadurch gekennzeichnet, daß** die Oberfläche des Zierelementes (2) mit einer galvanischen Beschichtung versehen ist.

16. Zierelement nach mindestens einem der Ansprüche 1 bis 13, **dadurch gekennzeichnet, daß** die Oberfläche des Zierelementes lackiert ist.

## Claims

1. Decorative element for cover caps of airbag modules, **characterized in that** predetermined breaking points and/or bending points are provided on the decorative element (2).

2. Decorative element according to Claim 1, **characterized in that** predetermined breaking points and bending points are provided in the region of the tear-open edges (3-7) of the cover cap (1).

3. Decorative element according to Claim 1 or 2, **characterized in that** predetermined breaking points (12-19) and bending points are provided outside the region of the tear-open edges (3-7) of the cover cap (1).

4. Decorative element according to at least one of the preceding claims, **characterized in that** material weakenings (22, 24, 25, 26, 28) are provided in the decorative element (2) of the predetermined breaking points.

5. Decorative element according to Claim 4, **characterized in that** grooves (22, 24) are provided as material weakenings.

6. Decorative element according to Claim 4 or 5, **characterized in that** the material weakenings (24, 25) are provided on the rear side of the decorative element (2).

7. Decorative element according to at least one of the preceding claims, **characterized in that** perforations (26, 28) are provided in the region of the predetermined breaking points.

8. Decorative element according to Claim 7, **characterized in that** the perforations (28) extend from the rear side of the decorative element (2) to just below the top side (27) of the latter.

9. Decorative element according to Claim 7 or 8, **characterized in that** continuous perforations (26) are provided.

10. Decorative element according to at least one of the preceding claims, **characterized in that**, in the case of a decorative element consisting of two components, a softer carrier material (20) and a harder covering layer (21) being provided, the material weakening (22) is provided in the covering layer (21).

11. Decorative element according to Claim 10, **characterized in that**, in the case of the material weakening (22) on the rear side of the covering layer (21), the carrier material (23) engages into the material weakening (22).

12. Decorative element according to at least one of the preceding claims, said decorative element (2) consisting of flexible plastic.

13. Decorative element according to at least one of the preceding claims, said decorative element (2) consisting of airbag cap material.

14. Decorative element according to one of the preceding claims, **characterized in that** the surface of the decorative element (2) is provided with a metal layer applied by sputtering.

15. Decorative element according to at least one of Claims 1 to 13, **characterized in that** the surface of the decorative element (2) is provided with an electroplated coating.

16. Decorative element according to at least one of Claims 1 to 13, **characterized in that** the surface of the decorative element is lacquered.

## Revendications

1. Elément décoratif pour des couvercles de modules de coussins gonflables, **caractérisé en ce que** des points destinés à la rupture et/ou des points destinés à la flexion sont prévus sur l'élément décoratif (2).

2. Elément décoratif selon la revendication 1, **caractérisé en ce que** des points destinés à la rupture et des points destinés à la flexion sont prévus dans la région des arêtes de déchirement (3 - 7) du couvercle (1).

3. Elément décoratif selon l'une ou l'autre des revendications 1 et 2, **caractérisé en ce que** des points destinés à la rupture (12 - 19) et des points destinés à la flexion sont prévus en dehors de la région des arêtes de déchirement (3 - 7) du couvercle (1).

4. Elément décoratif selon au moins l'une des revendications précédentes, **caractérisé en ce que** des affaiblissements de matériau (22, 24, 25, 26, 28) sont prévus au niveau des points destinés à la rupture dans l'élément décoratif (2).

5. Elément décoratif selon la revendication 4, **caractérisé en ce que** des rainures (22, 24) sont prévues à titre d'affaiblissements de matériau.

6. Elément décoratif selon l'une ou l'autre des revendications 4 et 5, **caractérisé en ce que** les affaiblissements de matériau (24, 25) sont prévus sur la face postérieure de l'élément décoratif (2).

7. Elément décoratif selon au moins l'une des revendications précédentes, **caractérisé en ce que** des perforations (26, 28) sont prévues dans la région des points destinés à la rupture.

8. Elément décoratif selon la revendication 7, **caractérisé en ce que** les perforations (28) vont de la face postérieure de l'élément décoratif (2) jusque juste au-dessous de sa face supérieure (27).

9. Elément décoratif selon l'une ou l'autre des revendications 7 et 8, **caractérisé en ce qu'**il est prévu des perforations (26) traversantes.

10. Elément décoratif selon au moins l'une des revendications précédentes, **caractérisé en ce que** dans le cas d'un élément décoratif constitué par deux composants, en prévoyant un matériau porteur (20) plus tendre et une couche de recouvrement (21) plus dure, l'affaiblissement de matériau est prévu dans la couche de recouvrement (21).

11. Elément décoratif selon la revendication 10, **caractérisé en ce que** dans le cas d'un affaiblissement de matériau (22) sur la face postérieure de la couche de recouvrement (21), le matériau porteur (23) s'engage dans l'affaiblissement de matériau (22).

12. Elément décoratif selon au moins l'une des revendications précédentes, **caractérisé en ce que** l'élément décoratif (2) est en matière plastique flexible.

13. Elément décoratif selon au moins l'une des revendications précédentes, **caractérisé en ce que** l'élément décoratif (2) est réalisé à partir du matériau du couvercle de coussin gonflable.

14. Elément décoratif selon au moins l'une des revendications précédentes, **caractérisé en ce que** la surface de l'élément décoratif (2) est pourvue d'une couche métallique appliquée par pulvérisation.

15. Elément décoratif selon au moins l'une des revendications 1 à 13, **caractérisé en ce que** la surface de l'élément décoratif (2) est pourvue d'un revêtement galvanique.

16. Elément décoratif selon au moins l'une des revendications 1 à 13, **caractérisé en ce que** la surface de l'élément décoratif (2) est laquée.
